# EUROPÄISCHE PATENTSCHRIFT

(11) **EP 3 622 164 B1**
(45) Veröffentlichungstag und Bekanntmachung des Hinweises auf die Patenterteilung: **17.02.2021**
(21) Anmeldenummer: 18734472.6
(22) Anmeldetag: 14.06.2018
(51) Int. Cl.: F01D 25/28, B23Q 9/02

(54) **AUFHÄNGUNGSSYSTEM FÜR EINE GASTURBINE UND ZUGEHÖRIGE GASTURBINE**
SUPPORT SYSTEM FOR A GAS TURBINE AND CORRESPONDING GAS TURBINE
SYSTÈME DE SUPPORT POUR UNE TURBINE À GAZ ET TURBINE À GAZ ASSOCIÉE

(30) Priorität: 12.07.2017 DE 102017211945
(43) Veröffentlichungstag der Anmeldung: 18.03.2020
(73) Patentinhaber: Siemens Energy Global GmbH & Co. KG, 81739 München (DE)
(72) Erfinder: MÜLLER, Dirk, 45470 Mülheim a.d.Ruhr (DE); KOWALZIK, Christian, 10589 Berlin (DE)
(86) Internationale Anmeldenummer: PCT/EP2018/065837
(87) Internationale Veröffentlichungsnummer: WO 2019/011575

(56) Entgegenhaltungen:
- EP-A1- 2 236 939
- EP-A1- 2 990 616
- EP-A1- 2 993 314
- DE-A1- 10 348 447

## Beschreibung

Die Erfindung betrifft ein Aufhängungssystem für eine Gasturbine. Die Erfindung betrifft weiterhin eine Gasturbine mit einem an ihrem Außengehäuse ausgebildeten Mannloch und mit einem solchen Aufhängungssystem.

Bei Wartungsarbeiten einer Gasturbine, insbesondere einer stationären Gasturbine, werden diverse Arbeiten im Abgaskanal durchgeführt. Es ist bei Gasturbinen dabei möglich, den mit Heißgas beaufschlagten Bereich im Inneren einer Gasturbine über einen speziell konzipierten Wartungszugang, genannt Mannloch, für das Wartungspersonal zugänglich zu machen.

Beispielsweise ist aus der EP 2 655 808 A1 ist ein Verfahren zum Abziehen eines Lagerkörpers vom Rotor einer stationären Gasturbine bekannt. Hierbei wird eine Wellenverlängerung am betreffenden Ende des Rotors befestigt und der Rotor zur Befreiung des Lagerkörpers von der Gewichtskraft des Rotors gleichzeitig abgestützt und/oder gehalten. Anschließend werden Gleitelemente zwischen dem Lagerkörper und Rotor angebracht, wonach der Lagerkörper entlang der Maschinenachse auf die Wellenverlängerung geschoben und dort geparkt werden kann. Eine solche Wellenverlängerung ist sehr groß, lang bzw. sperrig, so dass diese zwar durch das Mannloch passt, dann jedoch gedreht bzw. zum Lagerkörper hin bewegt werden muss.

Da das Mannloch nur eine begrenzte Öffnung hat und die Wartungswerkzeuge, wie z.B. die Wellenverlängerung, sich nur in der Mannlochöffnung bewegen können, reicht unter Umständen der Verfahrweg nicht aus oder es ist sehr aufwändig, die Wartungswerkzeuge an eine passende Stelle zu befördern bzw. diese zu platzieren. Dieses Problem wird beispielweise gelöst, indem Ösen an der Decke angebracht sind, um die Anhänge- und Hebepunktebereiche für den Verfahrweg der Wartungswerkzeuge oder Turbinenkomponenten zu erweitern.

Aus der EP 2 990 616 A1 ist eine weitere Vorrichtung zum Einbauen und Ausbauen eines Bauteils an einer Gasturbine bekannt, die ein Schienensystem umfasst, auf welchem ein Läufer entlang einer vorbestimmten Verschiebeachse verschoben werden kann.

Aufgabe der vorliegenden Erfindung ist es, ein neuartiges Aufhängungssystem vorzuschlagen, mit dessen Hilfe Wartungswerkzeuge und/oder Turbinenkomponenten auf einfache Weise durch ein Mannloch durchgeführt und an ihren Einsatzort verfahren werden.

Die Aufgabe wird erfindungsgemäß gelöst durch ein Aufhängungssystem für eine Gasturbine, umfassend zwei miteinander verbindbare Einheiten, wobei jede Einheit eine Schiene, an der Schiene einen kreissegmentförmigen Befestigungsabschnitt zum Befestigen der Schiene an einem Mannloch der Gasturbine, und pro Schiene zumindest ein Verfahrelement, welches entlang der Schiene verfahrbar ist, aufweist.

Die Aufgabe wird weiterhin erfindungsgemäß gelöst durch eine Gasturbine mit einem an ihrem Außengehäuse ausgebildeten Mannloch und mit einem solchen Aufhängungssystem, wobei das Mannloch um seinen Umfang einen Flansch aufweist und wobei die Befestigungsabschnitte mit dem Flansch derart lösbar verbunden sind, dass die Schienen mit den Verfahrelementen sich im Inneren der Gasturbine erstrecken.

Die in Bezug auf das Aufhängungssystem angeführten Vorteile und bevorzugten Ausgestaltungen lassen sich sinngemäß auf die Gasturbine übertragen.

Die Erfindung basiert auf der Idee, das Aufhängungssystem derart zu gestalten, dass es auf der einen Seite am Mannloch der Gasturbine sehr einfach und sicher befestigt werden kann und auf der anderen Seite eine große Bewegungsfreiheit innerhalb der Gasturbine ermöglicht. Dies wird erreicht, indem das Aufhängungssystem zweiteilig ausgestaltet wird, so dass beide Einheiten des Aufhängungssystems unabhängig voneinander an ihrem Einsatzort befestigt werden können. Bevorzugt sind dabei beide Einheiten identisch aufgebaut. Darüber hinaus korrespondieren die Befestigungsabschnitte des Aufhängungssystems bezüglich ihrer Form und Größe derart zu einem Flansch des Mannlochs, dass sie auf den Flansch aufgelegt und mit diesem lösbar verbunden, insbesondere verschraubt werden können. Dies wird insbesondere durch die kreissegmentförmigen Befestigungsabschnitte erreicht, wobei ein Radius des Kreissegments jedes der Befestigungsabschnitte im Wesentlichen einem Radius des Flansches des Mannlochs entspricht. Der ringförmige Flansch ist hierbei insbesondere durch eine ringförmige Auflagefläche um den Umfang des Mannlochs gebildet, wobei im Betrieb der Gasturbine ein Deckel auf dem Flansch montiert ist.

Die Befestigungsabschnitte des Aufhängungssystems sind insbesondere als Kreisbögen oder Kreissegmente mit einem Bogenradius und einer Länge, die durch die Kreissehne definiert ist, ausgestaltet. Dadurch, dass der Bogenradius der Befestigungsabschnitte im Wesentlichen dem Radius des Flansches entspricht, können die Befestigungsabschnitte mit ihrer äußeren Kontur bündig auf den Gegenbefestigungsabschnitt aufgelegt und in dieser Position fest montiert werden.

Beide Teile oder Einheiten des Aufhängungssystems werden zueinander diametral gegenüber liegend am Flansch des Mannlochs montiert, so dass mittig zwischen den beiden Befestigungsabschnitten ausreichend Platz vorhanden ist, damit Werkzeuge oder Turbinenkomponenten durchgeführt und ins Mannloch abgelassen werden können oder Wartungsarbeiter ins Innere der Gasturbine gelangen können. Dabei sind die Befestigungsabschnitte, die auf dem Flansch aufliegen, beabstandet von den Schienen, so dass im montierten Zustand des Aufhängungssystems die Befestigungsabschnitte auf dem Flansch aufliegen, während die Schienen sich im Inneren der Gasturbine erstrecken.

Die Aufhängung und das Verfahren der Werkzeuge oder Turbinenkomponenten an eine gewünschte Position erfolgt über die beiden Schienen des Aufhängungssystems. Die Schienen sind über Verbindungsstege mit dem jeweiligen Befestigungsabschnitt verbunden. Jede der Schienen erstreckt sich dabei parallel zur Kreissehne des Befestigungsabschnitts. Im montierten Zustand verlaufen die Schienen auch parallel zueinander. Beide Enden der Schiene sind gleich entfernt vom Befestigungsabschnitt. Die Schienen sind dabei in der Höhe etwas beabstandet von den Befestigungsabschnitten angeordnet, so dass im montierten Zustand des Aufhängungssystems die Befestigungsabschnitte außerhalb des Mannlochs auf dem Flansch aufliegen und gleichzeitig die Schienen sich vollständig im Inneren der Turbine erstrecken.

Auf jeder der Schienen ist zumindest ein Verfahrelement vorgesehen, welches insbesondere als eine Laufkatze ausgebildet ist, die entlang der jeweiligen Schiene verfahrbar ist. Die Verfahrelemente weisen insbesondere Ösen auf, an die Kettenzüge, welche zum Tragen der Wartungswerkzeuge oder Komponenten eingesetzt werden, aufgehängt werden können.

Der wesentliche Vorteil eines solchen Aufhängungssystems ist, dass es durch die lösbare Verbindung mit dem Mannloch wiederholt benutzt werden kann. Es kann zudem in mehreren Turbinentypen eingesetzt werden, da seine Form und Abmessungen lediglich mit der Größe des Mannlochs abgestimmt sind.

Gemäß einer bevorzugten Ausgestaltung umfasst das Aufhängungssystem zwei Querstreben, die sich quer zu beiden Schienen erstrecken und die Schienen miteinander verbinden. Hierdurch wird eine erhöhte Steifigkeit des Systems bei einer unsymmetrischen Gewichtsverteilung, insbesondere gegen Verdrehen, gewährleistet. Die Querstreben sind im Bereich der Enden der jeweiligen Schienen angeordnet. Die Querstreben liegen dabei vorteilhafterweise auf den Seiten der Schienen auf, die der Öffnung des Mannlochs zugewandt sind.

Gemäß einer weiteren bevorzugten Ausgestaltung ist jede Querstrebe an einer der Schienen schwenkbar gelagert. Die Querstrebe ist mit einem ersten Ende an der Schiene befestigt, dabei ist die Querstrebe um einen Drehpunkt schwenkbar gelagert. Die Querstrebe kann zumindest zwischen einer ersten Schwenkposition, bei der sie parallel zur Schiene verläuft, und einer zweiten Schwenkposition, bei der sie sich quer zur Schiene erstreckt und ihr gegenüberliegendes Ende die zweite Schiene erreicht, verschwenkt. D.h. im zusammengeklappten Zustand liegt die Querstrebe auf der ersten Schiene auf und im aufgeklappten Zustand erstreckt sie sich senkrecht zur ersten Schiene, an der sie insbesondere vormontiert ist und kann mit ihrem anderen Ende an der zweiten Schiene befestigt werden, so dass sie beide Schienen mechanisch miteinander verbindet. Es können dabei beide Querstreben an einer gemeinsamen Schiene schwenkbar montiert sein oder jede Querstrebe ist an einer anderen Schiene schwenkbar montiert.

Vorzugsweise sind an den Enden der Schienen Anschlagelemente zum Abstützen der Schienen auf dem Turbinengehäuse vorgesehen. Die Anschlagelemente sind insbesondere höhenverstellbar. Sie sind z.B. als Anstellschrauben ausgebildet, deren Höhe durch Auf- und Zudrehen angepasst wird.

Bevorzugt sind pro Schiene zwei Verfahrelemente vorgesehen, welche über eine Sicherung miteinander verbindbar sind. Mittels der Sicherung werden die Verfahrelemente insbesondere während der Durchführung der Schiene ins Mannloch in ihrer Position arretiert, damit die Kollisionsgefahr bei einem unerwünschten Verrutschen der Verfahrelemente vermindert wird.

Ein Ausführungsbeispiel der Erfindung wird anhand einer Zeichnung näher erläutert. Hierin zeigen:
- FIG 1: eine perspektivische Darstellung eines Aufhängungssystem, welches an einem Mannloch einer Gasturbine montiert ist und
- FIG 2: eine perspektivische Darstellung des detaillierten Aufbaus des Aufhängungssystems gemäß FIG 1.

Gleiche Bezugszeichen haben in den Figuren die gleiche Bedeutung.

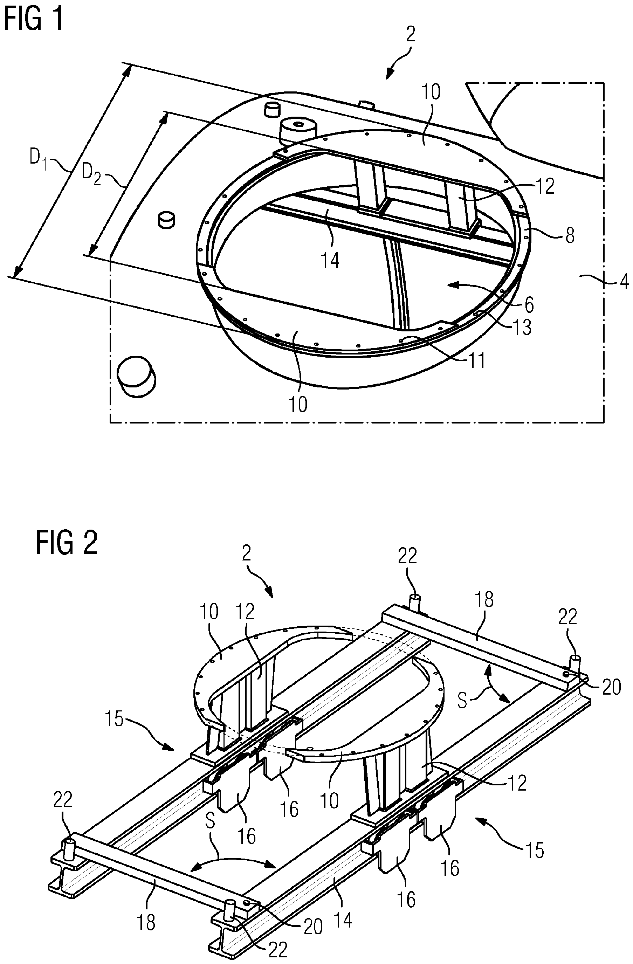

Aus FIG 1 ist ein Teil einer Gasturbine 4 ersichtlich, der ein Mannloch 6 mit einem ringförmigen Flansch 8 aufweist, in welchem ein zweiteiliges Aufhängungssystem 2 montiert ist. Das Aufhängungssystem 2 weist zwei Befestigungsabschnitte 10 auf, die im gezeigten Ausführungsbeispiel kreissegmentförmig ausgestaltet sind. Entlang des Kreisbogens der Befestigungsabschnitte 10 sind Bohrungen 11 ausgebildet, durch welche nicht näher gezeigte Schrauben durchgeführt werden können, wobei die Schrauben anschließend durch korrespondierende Bohrungen 13 am Flansch 8 des Mannlochs 6 durchgeführt werden, um eine Schraubverbindung zwischen dem Flansch 8 und den Befestigungsabschnitten 10 herzustellen.

Im montierten Zustand des Aufhängungssystems 2 beträgt der Abstand D₁ zwischen den zwei diametral am weitesten voneinander entfernten Punkten der Befestigungsabschnitte 10 zwischen 900 mm und 1500 mm. Dieser Abstand entspricht etwa dem Durchmesser des Mannlochs 6. Der Abstand D₂ zwischen der Kreissehnen der Befestigungsabschnitte 10 beträgt zwischen 800 mm und 1200 mm, im gezeigten Ausführungsbeispiel ist D₂=900 mm.

Über Verbindungsstege 12 ist an jedem der beiden Befestigungsabschnitte 10 eine Schiene 14 angeordnet. Wie aus FIG 2 ersichtlich, liegt eine symmetrische Anordnung der jeweiligen Schiene 14 in Bezug auf den zugehörigen Befestigungsabschnitt 10 vor, so dass beide Enden der Schiene 14 gleich entfernt vom Befestigungsabschnitt 10 sind. Pro Schiene 14 ist zumindest ein Verfahrelement 16 vorgesehen, hier eine Laufkatze, die entlang der gesamten Schiene 14 verfahren werden kann. Im Ausführungsbeispiel gemäß FIG 2 sind pro Schiene 14 jeweils zwei Laufkatzen 16 vorgesehen, die unabhängig voneinander verfahrbar sind. Die Laufkatzen 16 sind insbesondere über eine hier nicht näher gezeigte Sicherung miteinander verbindbar, so dass sie an ihrer Position gesichert sind und nicht unerwünschte Bewegungen entlang der Schienen 14 ausführen können.

Das Aufhängungssystem 2 weist dabei zwei Einheiten 15 auf, wobei jede Einheit 15 einen Befestigungsabschnitt 10 sowie eine Schiene 14 mit den zugehörigen Verfahrelementen 16 umfasst. Beide Einheiten 15 sind im gezeigten Ausführungsbeispiel identisch.

Darüber hinaus umfasst das Aufhängungssystem 2 zwei Querstreben 18, welche im Bereich der Enden der Schienen 14 die beiden Schienen 14 miteinander verbinden. Durch die Querstreben 18 werden beide Einheiten 15 miteinander mechanisch gekoppelt. Beide Querstreben 18 sind mit einem ersten Ende um einen Drehpunkt 20 schwenkbar an einer der Schienen 14 gehalten. Die Querstreben 18 können dabei eine Schwenkbewegung gemäß der Pfeile S ausführen. Im aufgeklappten Zustand, der in FIG 2 dargestellt ist, ist das zweite Ende der Querstreben 18 an der zweiten Schiene 14 befestigt.

Die Schienen 14 sind derart dimensioniert, dass die Querstreben 18 im zusammengeklappten Zustand vollständig auf der jeweiligen Schiene 14 aufliegen, d.h. jede der Schiene weist eine Länge auf, die sich aus der doppelten Länge der Querstreben 18 und zusätzlich der Länge des Bereichs für die Befestigung der Verbindungsstege 12 zusammensetzt.

An den Enden der Schienen 14 sind zudem Anschlagelemente 22 zum Abstützen der Schienen 14 auf einem Turbinengehäuse positioniert. Die Anschlagelemente 22 sind z.B. als Anstellschrauben ausgebildet.

Das Aufhängungssystem 2 kann auch weitere Elemente umfassen, beispielsweise solche, die zwischen den Befestigungsabschnitten 10 und dem Flansch 8 des Mannlochs 6 aufgelegt werden, um die Kraft der Befestigungsabschnitte 10 auf eine größere Fläche zu verteilen.

Die Montage des Aufhängungssystems 2 erfolgt beispielsweise auf folgende Weise: mit gesicherten Laufkatzen 16 wird im ersten Schritt die erste Schiene 14 durch das Mannloch 6 abgelassen. Dabei wird die Schiene 14 zunächst in die Senkrechte gebracht. Erst im Inneren der Gasturbine 4 wird die Schiene 14 zurück in die horizontale Lage gebracht. Der Befestigungsabschnitt 10 wird auf dem Flansch 8 des Mannlochs 6 abgelassen, wobei darauf zu achten ist, dass die Bohrungen 13 vom Flansch 8 und die Bohrungen 11 vom Befestigungsabschnitt 10 fluchten. Anschließend werden die Schrauben in die Bohrungen 11 und 13 eingeschraubt.

Auf die gleiche Art wird auch die zweite Schiene 14 montiert.

Schließlich werden die Querstreben ausgeklappt und gesichert und die Anstellschrauben 22 werden herausgedreht, bis diese am Gehäuse der Gasturbine 4 anliegen, damit ein Verbiegen der Schienen 14 unter Last verhindert wird.

Um das Aufhängungssystem 2 zu verwenden, werden die Kettenzüge an die vier Laufkatzen 16 angehängt. Die Sicherung der Laufkatzen 16 wird dann gelöst und diese werden entlang der Schienen 14 verfahren.

## Patentansprüche

1. Aufhängungssystem (2) für eine Gasturbine (4), umfassend zwei miteinander verbindbare Einheiten, wobei jede Einheit eine Schiene (14), an der Schiene (14) einen kreissegmentförmigen Befestigungsabschnitt (10) zum Befestigen der Schiene (14) an einem Mannloch (6) der Gasturbine (4), und pro Schiene (14) zumindest ein Verfahrelement (16), welches entlang der Schiene (14) verfahrbar ist, aufweist.

2. Aufhängungssystem (2) nach Anspruch 1,
wobei beide Einheiten identisch aufgebaut sind.

3. Aufhängungssystem (2) nach Anspruch 1 oder 2,
umfassend zwei Querstreben (18), die sich quer zu den beiden erstrecken und die Schienen (14) miteinander verbinden.

4. Aufhängungssystem (2) nach Anspruch 3,
wobei jede Querstrebe (18) an einer der Schienen (14) schwenkbar gelagert ist.

5. Aufhängungssystem (2) nach einem der vorhergehenden Ansprüche,
wobei an den Enden der Schienen (14) Anschlagelemente (22) zum Abstützen der Schienen (14) auf einem Turbinengehäuse vorgesehen sind.

6. Aufhängungssystem (2) nach einem der vorhergehenden Ansprüche,
wobei pro Schiene (14) zwei Verfahrelemente (16) vorgesehen sind, welche über eine Sicherung miteinander verbindbar sind.

7. Gasturbine (4) mit einem an ihrem Außengehäuse ausgebildeten Mannloch (6) und mit einem Aufhängungssystem (2) nach einem der vorhergehenden Ansprüche, wobei das Mannloch (6) um seinen Umfang einen Flansch (8) aufweist und wobei die Befestigungsabschnitte (10) mit dem Flansch (8) derart lösbar verbunden sind, dass die Schienen (14) mit den Verfahrelementen (16) sich im Inneren der Gasturbine erstrecken.

8. Gasturbine (4) nach Anspruch 7,
wobei ein Radius des Kreissegments des kreissegmentförmigen Befestigungsabschnitts (10) im Wesentlichen einem Radius des Flansches (8) des Mannlochs (6) entspricht.

## Claims

1. Mounting system (2) for a gas turbine (4), comprising two units which can be connected to each other, wherein each unit has a rail (14), a fastening section (10) in the shape of a segment of a circle, on the rail (14), for fastening the rail (14) to a manhole (6) of the gas turbine (4), and at least one displacement element (16) per rail (14), which can be displaced along the rail (14).

2. Mounting system (2) according to Claim 1,
wherein both units have an identical construction.

3. Mounting system (2) according to Claim 1 or 2,
comprising two cross-struts (18) which extend transversely with respect to both rails (14) and interconnect the rails (14).

4. Mounting system (2) according to Claim 3,
wherein each cross-strut (18) is hinged on one of the rails (14).

5. Mounting system (2) according to one of the preceding claims,
wherein abutment elements (22) for supporting the rails (14) on a turbine housing are provided at the ends of the rails (14).

6. Mounting system (2) according to one of the preceding claims,
wherein two displacement elements (16) which can be interconnected via a safety device are provided per rail (14).

7. Gas turbine (4) with a manhole (6) formed on its outer housing and with a mounting system (2) according to one of the preceding claims, wherein the manhole (6) has a flange (8) around its circumference and wherein the fastening sections (10) are connected detachably to the flange (8) in such a way that the rails (14) with the displacement elements (16) extend in the interior of the gas turbine.

8. Gas turbine (4) according to Claim 7,
wherein a radius of the segment of a circle of the fastening section (10) in the shape of a segment of a circle corresponds essentially to a radius of the flange (8) of the manhole (6).

## Revendications

1. Système (2) de suspension d'une turbine (4) à gaz, comprenant deux unités pouvant être assemblées l'une à l'autre, chaque unité ayant un rail (14), une partie (10) de fixation en forme de segment de cercle sur le rail (14) pour la fixation du rail (14) à un trou d'homme (6) de la turbine (4) à gaz et, par rail (14), au moins un élément (16) de déplacement, qui peut être déplacé le long du rail (14).

2. Système (2) de suspension suivant la revendication 1, dans lequel les deux unités sont constituées pareillement.

3. Système (2) de suspension suivant la revendication 1 ou 2,
comprenant deux traverses (18), qui s'étendent transversalement aux deux et qui assemblent les rails (14) entre eux.

4. Système (2) de suspension suivant la revendication 3, dans lequel chaque traverse (18) est montée pivotante sur l'un des rails (14).

5. Système (2) de suspension suivant l'une des revendications précédentes,

6. Système (2) de suspension suivant l'une des revendications précédentes,
dans lequel il est prévu, par rail (14), deux éléments (16) de déplacement, qui sont assemblés l'un à l'autre par une fixation.

7. Turbine (4) à gaz ayant un trou d'homme (6) constitué sur son enveloppe extérieure et ayant un système (2) de suspension suivant l'une des revendications précédentes, le trou d'homme (6) ayant, autour de son pourtour, une bride (8), et dans laquelle les parties (10) de fixation sont assemblées de manière amovible à la bride (8), de façon à ce que les rails (14) s'étendent, par les éléments (16) de déplacement, à l'intérieur de la turbine à gaz.

8. Turbine (4) à gaz suivant la revendication 3, dans laquelle un rayon du segment de cercle de la partie (10) de fixation en forme de segment de cercle correspond sensiblement à un rayon de la bride (8) du trou d'homme (6).
